# EUROPEAN PATENT APPLICATION

(11) **EP 3 098 060 A1**
(43) Date of publication of application: **30.11.2016**
(21) Application number: 15169807.3
(22) Date of filing: 29.05.2015
(51) Int. Cl.: B29C 65/16, B29C 65/00, B32B 27/12, B32B 37/04, B29L 7/00

(54) **PROCESS AND DEVICE FOR PRODUCING A LAMINATE**

(71) Applicant: Henkel AG & Co. KGaA, 40589 Düsseldorf (DE); Henkel IP & Holding GmbH, 40589 Düsseldorf (DE)
(72) Inventor: KINZELMANN, Hans-Georg, 50259 Pulheim (DE); MCKINLEY, Ron, 40233 Düsseldorf (DE)

(57) **Abstract**

The present invention relates to a process for laminating a first substrate (4), which comprises a thermoplastic polymer material surface, and wherein the first substrate (4) preferably is a thermoplastic polymer film, to a second substrate (2), wherein the second substrate (2) preferably is a non-woven or woven fabric, wherein the thermoplastic polymer material surface is activated by irradiation with a laser beam (11) prior to laminating the two substrates to each other as well as a device (1) for carrying out such a process.

## Description

The present invention relates to a process for laminating a first substrate, which comprises a thermoplastic polymer material surface, and wherein the first substrate preferably is a thermoplastic polymer film, to a second substrate, wherein the second substrate preferably is a non-woven or woven fabric, wherein the thermoplastic polymer material surface is activated by irradiation with a laser beam prior to laminating the two substrates to each other as well as a device for carrying out such a process.

International patent publication WO 2014/118356 A1 describes a method for producing a laminate without an adhesive, wherein said laminate comprises a thermoplastic film and a non-woven or woven fabric. In the described process, only the surface of the thermoplastic film is heated by means of infrared irradiation before pressing it to the fabric to produce the laminate to provide on the one hand the necessary adhesiveness and on the other hand avoid impairment of the structural integrity and thus the mechanical properties of the polymer film. To avoid melting the complete film, the process includes the step of cooling the underside of the polymer film during IR irradiation.

While this process avoids the drawbacks connected to heating the complete polymer film and the resulting loss of structural integrity and thus also allows the production of very thin laminates, such as those required for sanitary products, it requires extensive adaptations to existing production facilities to implement the cooling means for the backside (underside) of the polymer film. In addition, the resulting heat exposure of the laminator device is undesirable.

Accordingly, there exists need in the art for improved processes that overcome the drawbacks of existing techniques, in particular those described above.

This existing need is met by the processes described herein that use laser activation of the thermoplastic polymer material surface thus obviating the need for cooling means and also minimizing heat exposure of the lamination equipment.

In a first aspect, the present invention is therefore directed to a process, preferably continuous process, for bonding at least one first substrate, which comprises a thermoplastic polymer material surface, to at least one second substrate without an adhesive to form a laminate, comprising
(a) irradiating the thermoplastic polymer material surface with electromagnetic radiation in form of a laser beam such that the thermoplastic polymer material surface is at least locally heated to a softened state; and
(b) laminating the laser irradiated softened thermoplastic polymer material surface to the non-woven or woven fabric.

In another aspect, the present invention is directed to a device for laminating at least one first substrate, wherein the at least one first substrate comprises a thermoplastic polymer material surface, and wherein the at least one first substrate preferably is a thermoplastic polymer film, to at least one second substrate, wherein the at least one second substrate preferably is a non-woven or woven fabric, without an adhesive to form a laminate, preferably in a continuous process, comprising
(a) at least one transporting means to transport the at least one first substrate, the at least one second substrate or both in a feed direction;
(b) a laser for generating a laser beam and irradiating the thermoplastic polymer material surface such that it is at least locally heated to a softened state, wherein the laser beam is guided such that its projection on the thermoplastic polymer material surface is moved relatively to the surface in a projection movement direction, wherein the projection movement direction is at least temporally angled relative to the feed direction, to allow heating the thermoplastic polymer material surface before the laminating step during movement of the first substrate in the feed direction, wherein the laser preferably emits infrared radiation of a wavelength in the range of 1 to 12 µm, preferably 5 to 10 µm, more preferably 9 to 10 µm, wherein the laser optionally is a CO₂ laser;
(c) a laminating unit to laminate the at least one first substrate with its softened thermoplastic polymer material surface side to the at least one second substrate.

Prefered embodiments are set out in the dependent claims.

"At least one", as used herein, means one or more, i.e. 1, 2, 3, 4, 5, 6, 7, 8, 9 or more of the referenced species.

"Laminate", as used herein, refers to a laminate of two or more layers, preferably at least one thermoplastic polymer material layer and at least one non-woven or woven fabric layer, which are bonded together by means of the inventive process and without a laminating adhesive.

"About" or "approximately" as used herein in connection with a numerical value refers to the numerical value ± 10%, preferably ± 5%."About 90°" thus relates to 90° ± 9°, preferably 90° ± 4.5°.

The gist of the invention is to provide a method for preferably continuous bonding of two substrates without an adhesive, wherein a first substrate that comprises a thermoplastic polymer material surface, which is preferably is a thermoplastic polymer film, is transported in a feed direction and heated with electromagnetic radiation in the form of a laser beam to achieve a softened state at the surface of the thermoplastic polymer material and the softened side of the first substrate is then bonded to the second substrate, which is preferably a non-woven or woven fabric. The process allows omitting an adhesive, as the adhesiveness is created by heating the thermoplastic polymer material surface and, due to the use of a laser beam for heating the surface, no cooling of the first substrate during or after the heating and prior to lamination is required. Accordingly, the process described herein is, with respect to simplicity and cost-effectiveness, advantageous over existing processes, as the need for active cooling, which requires adequate instrumentation is obviated and the exposure of the laminating equipment to heating is minimized.

"Without an adhesive", as used in this context, is intended to refer to the fact that no separate adhesive composition is applied to one or both of the substrates to be bonded before or during lamination, but that bonding of the first substrate and the second substrate occurs by the properties of the respective substrate materials alone, specifically by heating and thus softening or melting the thermoplastic polymer material surface of the first substrate.

In various embodiments of the claimed invention, the process does not include a step of cooling the first substrate during or after irradiation with the laser beam. "Cooling", as used in this context, relates to active cooling of the first substrate by a cooling device, the cooling device typically having a temperature below ambient temperature.

The first substrate for the inventive process may be selected from a variety of different thermoplastic polymer materials, including but not limited to polyolefins, such as polyethylene (LDPE, LLDPE, metallocene-catalyzed PE, HDPE), polypropylene (PP, CPP, OPP) and polystyrene (PS); styrene block copolymers, such as styrene-butadiene-styrene (SBS), styreneisoprene-styrene (SIS), styrene-isoprene/butadiene-styrene (SIBS), styrene-ethylene/butylene-styrene (SEBS), styrene-ethylene/propylene (SEP), styrene-ethylene/propylene-styrene (SEPS), acrylonitrile-butadiene-styrene copolymer (ABS); isoprene rubber (IR); polyvinyl chloride (PVC); ethylene copolymers, such as ethylene vinyl acetate (EVA), ethylene (meth)acrylate copolymers, including ethylene methyl acrylate (EMA), ethylene methyl methacrylate (EMMA), ethylene acrylic acid (EAA); polyesters; polylactide (PLA); polyamide; and blends thereof. As the first substrate, flexible sheet materials are preferred, such as thermoplastic polymer films made of the afore-mentioned thermoplastic polymer materials. The afore-mentioned polymer materials, in particular the flexible sheet materials, such as the thermoplastic polymer films made of the afore-mentioned thermoplastic polymer materials, can also be modified. For example, the plastic surface can be modified with functional groups or additional components, such as pigments and/or dyes, can be included in the films.

The first substrate may also be a composite substrate, as long as the surface to be bonded of the composite substrate is coated with a thermoplastic polymer material, as defined above. In various embodiments, the first substrate is selected from colored or colorless transparent films, such as packaging films, decorative films, tapes or similar films. The first substrate may thus consist of a thermoplastic material as defined above or may comprise a surface made of such a thermoplastic polymer material.

The thermoplastic polymer materials used in accordance with the present invention preferably have a softening temperature below 200 °C, more preferably below 150 °C. The softening temperature (or softening) can be determined according to DIN EN ISO 11357-3 with DSC at a heating rate of 10 K/min and preferably is the thus identifiable melting peak temperature Tₚₘ. "Softened state", as used herein, thus relates to the state a material adopts once it is heated above its softening point. The softened state may include a molten state.

A pretreatment of the surface of the substrates may be performed. The plastic surfaces can be cleaned and may optionally be subjected to a physical, chemical or electrochemical pretreatment before bonding.

Substrates which are suitable as the at least one first substrate can also be used as the at least on second substrate. In this way, it is possible to obtain film/film-laminates by the process according the invention.

In a preferred embodiment, the second substrate is a non-woven or woven fabric, preferably a synthetic fabric made of a polymer. Suitable non-woven fabrics include, without limitation, nonwovens made of polyethylene, polypropylene, polyester, such polylactic acid and polyethylene terephthalate, polyamide, and the like. Suitable non-woven fabrics also include bi-component non-woven fabrics which are based on two different fiber materials. Suitable woven fabrics include, without limitation, wovens made of polyethylene, polypropylene, polyester, such polylactic acid and polyethylene terephthalate, polyamide, and the like.

According to the invention it is necessary that prior to bonding of the substrates, the first substrate is heated at the surface to be bonded. The heating is preferably to be performed so that only the surface is heated, so that the mechanical properties of the first substrate are not adversely affected or the adverse effect is minimized. According to the invention electromagnetic radiation is used in the form of a laser beam for heating the surface. This allows a large amount of energy in a short time on a limited surface area. In contrast to a heating with a lamp, the surface of the first substrate is thus not heated over a large area over a longer period. In addition, the laser beam allows local heating of the thermoplastic polymer material surface and thus softening of only discrete areas on the surface, if desired.

During the inventive process, both substrates are brought together for bonding. As the process is preferably a continuous process, the substrates are preferably transported to a laminating device, for example such that the first substrate is a moving film and/or the second substrate is a moving web. The transport can be done by means of a known feed device. As the first substrate is usually transported to the laminator by means of a feed device, it is exposed to tensile stresses. These tensile stresses can cause deformation of the substrate when larger areas of the substrate are softened. The use of a laser beam allows a targeted, focused heating shortly before bonding the substrates so that deformations are reduced. A further advantage of using a laser beam is that the waste heat discharged into the environment is low. This protects the machine components and reduces energy consumption. In addition, lasers operate with a relatively high efficiency and are very energy efficient. Finally, existing laminating equipment can comparatively easily be retrofitted with a laser unit.

In various embodiments, the electromagnetic radiation used is infrared (IR) radiation in the wavelength range of 1 to 12 microns (µm). Since the frequencies and wave numbers of the vibrations of atoms or groups of atoms are in this range, the IR radiation is absorbed particularly well under vibration excitation. This leads to an energy-efficient and rapid warming of the irradiated substrate. Preferred is the wavelength range from 5 to 10 microns, especially from 9 to 10 microns, since in this region there are the oscillation frequencies of atomic groups frequently present in polymers, such as OH, NH, CH, C=O, C=C. Typical thermoplastic materials absorb IR radiation in this wavelength range. There are many types of lasers that emit infrared radiation in the range from 1 to 12 µm. These include, for example, gas lasers, such as carbon monoxide and carbon dioxide lasers (CO₂ laser), but also solid-state lasers such as Nd:YAG, Nd,Cr:YAG, Er:YAG, Nd:YLF, Nd:YVO₄, Nd:glass, Tm:YAG, Yb:YAG, Ho:Yag and Cr:ZnSe lasers. Particularly preferred are carbon dioxide lasers. CO₂ lasers operate at a wavelength of 9.4 and 10.6 µm. The use of CO₂ lasers has several advantages: CO₂ lasers can be operated continuously. Their efficiency is very high, that is, they are extremely energy efficient. The power of the radiation can also be from a few milliwatts (mW) to hundreds of kilowatts (kW). Furthermore, CO₂ lasers are relatively inexpensive and easy to implement.

Preferably the laser has a power in the range from 1 to 25 kW, more preferably 1 to 10 kW. If the laser power is too high, there is a risk that the substrate is damaged, if it is too low, the surface of the substrate is not sufficiently heated.

In a particular embodiment, the laser is operated continuously (CW mode). In a further embodiment, it is operated in pulsed mode, with the pulse frequency being so high that it is almost equivalent to a CW mode. A continuous or quasi-continuous operation allows that every point of the surface of the first substrate is heated and so a homogeneous bond occurs.

A low pulsed laser results in a surface that is not irradiated homogeneously so that a uniform softening is not guaranteed. This may lead to defects in the laminate. However, under certain circumstances where only local softening of the surface is desired, a pulsed laser may be used and may even be advantageous.

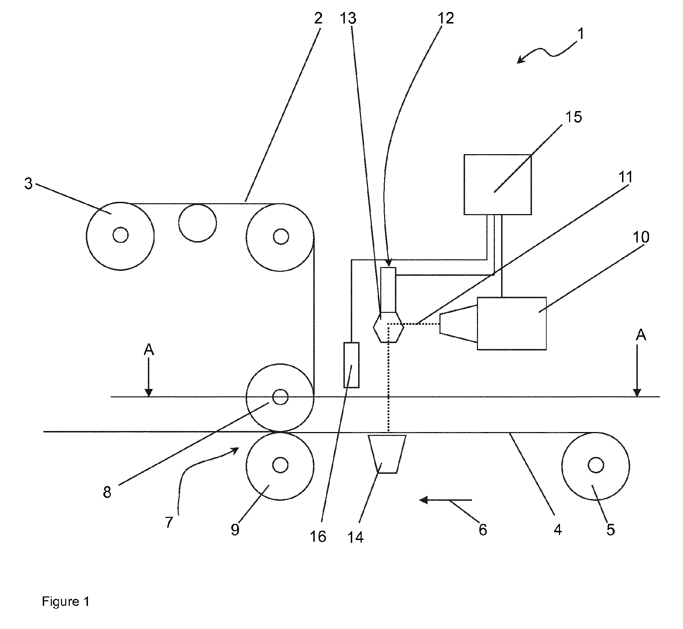

In various embodiments of the inventive processes, the laser beam is guided onto the thermoplastic polymer material surface at an angle with respect to the feed direction of the first substrate before bonding it to the second substrate. "Feed direction", as used in this context, relates to the movement direction of the first substrate at the location of the incident laser beam. In Figure 1, the feed direction 6 corresponds to the transport direction. Guided at an angle with respect to the feed direction means that the laser beam is guided such that its projection on the film surface moves relatively to the surface in a projection movement direction with the projection movement direction of the projection of the laser beam being at least temporarily angled relative to the feed direction. So, without limitation, the laser beam may be guided over the substrate surface in a projection path essentially perpendicular (orthogonal) to the feed direction. This means that at least temporally the projection of the laser beam onto the surface moves in direction other than the feed direction.

Due to the angled guiding of the laser beam, heating of the substrate directly before bonding the substrates is possible. This provides several advantages compared to a two-dimensional radiation such as that resulting, for example, by using an infrared lamp. On the one hand it allows to significantly shorten the time between heating and bonding. The undesired cooling of the substrate which occurs between irradiation and bonding is thus reduced. As a consequence, there is expended less energy to compensate for this heat loss. This makes the process more energy efficient and reduces unwanted release of heat to the surroundings. Moreover, the first substrate is not softened over the entire surface as for example by an IR lamp. This increases the dimensional stability of the substrate and no deformation, as it can be observed in cases where a large area of the substrate, which is by means of the feed device subjected to tensile stress, is softened. In other words, it is advantageous if the heating is done quickly and only a small area of the surface to be bonded is heated directly before bonding. Thus, it can be ensured that the mechanical properties of the first substrate are little or ideally not impaired.

In various embodiments of the described processes, both substrates are brought together and bonded immediately after heating so that the surface of the first substrate cannot significantly cool after the heating. In various embodiments, the heated area of the first substrate is brought together with the second substrate less than 1 s, preferably less than 0.1 s, more preferably less than 0.01 s after heating.

The heating of the surface can be done to a temperature which preferably corresponds approximately to the softening temperature of the thermoplastic polymer material of the first substrate. It is, however, known to those skilled in the art that thermoplastic polymer materials can adopt a softened state in a temperature range around the softening temperature. Therefore, the surface of the first substrate is preferably heated to a temperature that corresponds to the softening temperature of the thermoplastic polymer material ±40°C, preferably ±20 °C. At these temperatures, the surface of the substrate is soft and optionally under pressure deformable or flowable.

For joining and bonding the substrates in the laminating step, conventional devices can be used. For example, stamps, rollers or plates can be used for joining the substrates, in particular by pressing or rolling of the substrates against each other. The pressure on the substrates during a bonding by rolling, can for example be between 0.2 to 15 bar. Generally, suitable laminating devices are known and available in the art. Accordingly, in various embodiments of the process, the joining of the softened side of the first substrate with the second substrate can be supported, for example, by pressure. This can, for example, be applied by rollers and may range from about 0.2 to about 16 bar. In various embodiments of the inventive process, it is possible to achieve a full-surface adhesion of the substrates without any adhesives. In other embodiments of the inventive process, the substrates are bonded without any adhesives in a patterning which may have any suitable form, typical embodiments include a line or dotted line or a spot-like pattern.

The present process has been found to be particularly advantageous if the substrates are moved at a rate of more than 10 m/min, in particular more than 100 m/min, optionally being transported by rollers. In further preferred embodiments, both substrates are laminated by means of rollers as described above, wherein the laser beam projection is guided such that it is close to the nip, preferably less than 10 cm, more preferably less than 1 cm before the nip. Generally, it is advantageous that the laser beam projection impinges on the thermoplastic polymer material surface to be bonded at a location less than 10 cm, preferably less than 1 cm, before the site where the two substrates are brought into contact with each other, preferably the nip of a roll laminator.

Especially advantageous is a projection area of the laser beam on the thermoplastic polymer material surface to be bonded with a width in the range of 0.1 to 20 mm, preferably from 1 to 10 mm. Due to the high speed, the short distance of the laser beam to the roller nip and the small width of the laser beam projection area, the time interval between heating and bonding is significantly shortened. As discussed above, a reduction in the time span between irradiation and adhesion leads to an improvement of the energy efficiency and the resultant composite body exhibits substantially less unwanted deformations.

In various embodiments of the invention, the laser beam is directed or deflected to the thermoplastic polymer material surface by a polygonal mirror, which is pivotable around a rotation axis. This may occur before and/or subsequently to an optional focusing step of the laser beam by a focusing means.

In various embodiments, the laser beam is guided over the first substrate surface in a line pattern. The use of a polygon mirror allows for a very rapid movement of the laser beam across the substrate surface. The rotation speed of the rotatably mounted polygon mirror is typically selected depending on the specific feed speed, the beam diameter, the line spacing, and the distance from the polygon mirror to the substrate surface. In one embodiment, it has been found to be particularly advantageous if the rotatably mounted polygon mirror rotates at a speed of more than 300, especially more than 1000 rotations per minute around said axis of rotation.

Further, it is advantageous to bond the two substrates continuously, whereby the laser beam is guided over the substrate surface such that its speed is matched to the feed speed in such a way that the time interval between the irradiation by the laser beam and the subsequent bonding of each of the points on the surface of the first substrate to be bonded during the bonding step is substantially identical. This ensures that the temperature and consequently the softening is substantially identical for each of the points of the surface to be bonded during the bonding step. It has therefore been found to be advantageous to guide the laser beam substantially in a linear pattern and/or substantially orthogonal to the feed direction over the first substrate. The movement of the spot produced by the laser beam on the substrate surface along the projection movement direction results in a projection line with a projection width which is determined by the cross section of the laser beam. By a suitable choice of projection speed, feed speed and projection width it can be ensured that the second substrate has the same temperature at all points on a line orthogonal to the feed direction.

Further, in various embodiments, the guidance of the laser beam is such that the vector of the direction of incidence of the laser beam and the vector of the feed direction form an angle of less than 120°, preferably less than 90°, more preferably less than 60°. Thus, the surface of the first substrate can be irradiated as short as possible before bonding with the second substrate.

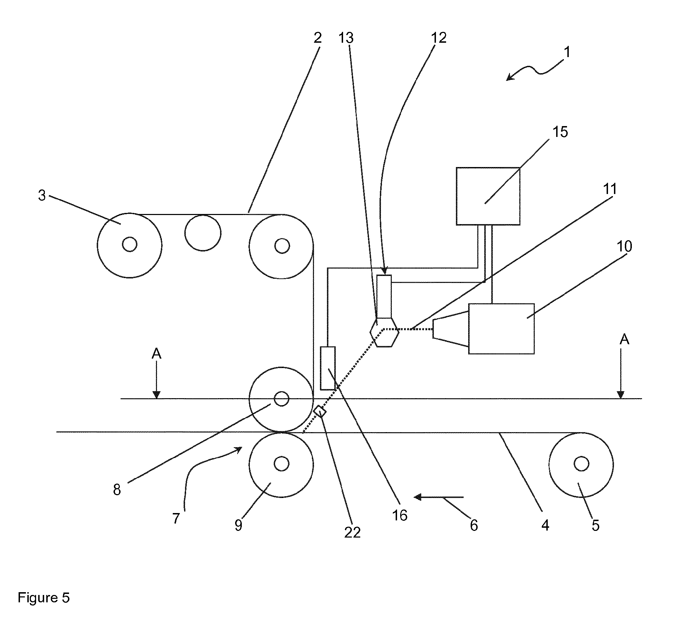

In various embodiments, the laser beam may be directed through a photomask for patterning the surface of the thermoplastic polymer material. This patterning leads to heating and softening of the surface only in predetermined areas so that a bonding with the second substrate only occurs locally, but not over the whole area of the first substrate. The photomask may have the form of a comb or sieve and may be arranged directly before the laminating device. Such embodiments are preferred for applications where no full bonding of the two substrates over their whole surface is desired. The patterning may have any suitable form, typical embodiments include a line or dotted line or a spot-like pattern. Such an embodiment is by way of a non-limiting example schematically depicted in Figures 5 to 8.

The invention is also directed to the laminate obtainable according to the described processes as well as the use thereof for various applications, including, but not limited to packaging applications and sanitary products, including diapers and sanitary napkins.

A further aspect of the present invention relates to a device for carrying out a process according to the invention, in particular for continuously bonding a first, preferably sheet-shaped substrate with a second substrate, with the substrates being as defined above. The device or apparatus comprises at least one transporting means to transport the at least one first substrate, the at least one second substrate or both in a feed direction; a laser for generating a laser beam and irradiating the surface of the thermoplastic polymer material such that the surface of the thermoplastic polymer material is at least locally heated to a temperature where is adopts a softened state; and a laminating device to laminate the first substrate with its softened thermoplastic polymer material surface to the second substrate. The laser may be arranged to allow the laser beam to be guided such that its projection on the thermoplastic polymer material surface can be moved relatively to the surface in a projection movement direction, wherein the projection movement direction is at least temporally angled relative to the feed direction. This allows heating the polymer surface before the laminating step during movement of the first substrate in the feed direction. The laminating device may include a laminating press, including rollers or plates or similar means to bond the two substrates under pressure.

With respect to the arrangement of the laser, the substrates to be bonded and various aspects, reference is made to the above description in relation to the inventive processes, which are similarly applicable to the devices.

The transporting means can be any suitable feeding device which makes it possible to move the first substrate in a feed direction. Such feeding devices are known to those skilled in the art. Feed direction, as used herein, generally relates to the movement direction of the first substrate at the location of the incident laser beam. Preferably, the feed device is designed such that it enables a continuous feed of the first substrate in the feed direction. In addition, a further feed means may be provided for the second substrate, which preferably also allows a continuous feed. In this case, both feed devices are preferably coupled in such a manner or connected via a control system, in particular via a control unit, that a uniform feed of both substrates can be ensured. In one embodiment, the feeding of the substrates can also be effected by the laminating device, which, in this case, is preferably designed as a roller or cylinder-like unit that enables a continuous feeding of the substrates. In various embodiments, the feeding devices allow transport speeds of 10 m/min or more, in particular 100 m/min or more.

The laser can be any suitable laser, such as those described above in connection with the processes of the invention. In various embodiments, the laser unit further comprises means for focusing and guiding the laser beam, all of which are known to those skilled in the art and include the above-mentioned polygon mirrors. The laser unit is preferably designed such that the laser beam can be guided over the thermoplastic polymer material surface in a manner as it has been described above in relation to the inventive processes.

In a preferred embodiment, the laser unit thus comprises a beam guiding unit or beam control unit, which deflects the laser beam and is adapted to guide the laser beam across the surface of the first substrate. Accordingly, the beam guiding unit is used as described above for active movement projection. The beam control unit may be directly connected to the laser unit and may, as also described above, further comprise one or more focusing means for focusing the laser beam. Alternatively, however, a separate focusing means can be provided which is completely separated from the laser itself and/or the beam guiding unit. The beam guiding unit can be designed for the movement of the projection in a spatial dimension, such as, for example, in a linear motion as described above, and may thus be a galvanometer driver, a preferably continuously rotating mirror or a preferably continuously rotating mirror prism. The latter is also known as a polygon mirror. Further, a two-dimensional movement of the projection is possible, so that two mirrors can be used, which each can be deflected in two directions. Alternatively, the use of two orthogonally rotatable and adjacently positioned mirrors by which the laser beam is reflected is also possible.

In a preferred embodiment a rotatably mounted polygon mirror for deflecting the laser beam is used to guide the laser beam over the surface of the first substrate and thus to move the projection of the laser beam across the surface. This makes it particularly easy to achieve the above-described preferred linear movement of the projection over the surface.

Preferably, the laser beam is guided or deflected so that the projection is moved linearly across the surface. Particular preference is also given to embodiments, wherein the movement of the projection is substantially orthogonal to the feed direction. "Substantially orthogonal", as used herein, relates to an angle of 90° ± 15° relative to the feed direction. In various embodiments, the, preferably linear, movement of the laser beam projection vector over the surface is at an angle relative to the vector of the feed direction that is chosen such that, particularly when reaching the laminating device, preferably a nip of two laminating rolls, all areas on the surface irradiated by the laser beam along a line orthogonal to the feed direction are at essentially the same temperature.

The laminating device may be, as described above, any known conventional device for joining and bonding. For example, stamps, rolls and/or plates can be used for joining the substrates, in particular by pressing or rolling of the substrates against each other. The pressure on the substrates shown during a merge by rolling, can for example be between 0.2 and 15 bar. In various embodiments, the laminator is a roll laminator comprising at least two rolls, wherein the two rolls transport the first and second substrate, respectively, and the two substrates are then bonded by the exertion of pressure in the roll nip. Such laminating devices are generally known to the skilled person. In the use of such rollers or rolls, it is preferred that these are designed such that the substrates are transported at a rate of 10 m/min or more, in particular 100 m/min or more.

By way of example, a device according to the invention, with which a process of the invention can be performed will be described by reference to the accompanying figures.
Figure 1 is a schematic view of an apparatus according to the invention.
Figure 2 is a sectional view through the section line A - A of the device of Figure 1 in a snapshot.
Figure 3 is the sectional view of Figure 2 after the expiration of a time period t1.
Figure 4 is the sectional view of Figure 2 after the expiration of a time period t2.
Figure 5 is a schematic view of an apparatus according to the invention.
Figure 6 is a sectional view through the section line A - A of the device of Figure 5 in a snapshot. Figure 7 is the sectional view of Figure 6 after the expiration of a time period t1.
Figure 8 is the sectional view of Figure 6 after the expiration of a time period t2.

Figure 1 shows a schematic view of a device of the invention 1 for continuous bonding a second substrate 2, which is by way of example in the form of a non-woven or woven fabric, with a first sheet-shaped substrate 4, which is by way of example made of a thermoplastic polymer material. The second sheet-shaped substrate 2 is in this case on a supply roll 3 and is fed by means of a not further described feed device comprising a drive and a plurality of deflection and/or guiding rollers. The second substrate 2 is transported towards a pressure unit 7 for pressing one side of the second substrate 2 to the first substrate 4.

The first substrate 4, in turn, is in this case on a supply roll 5 and is fed by means not described in detail also with a feed device in a feed direction 6 of the pressure unit 7. Immediately before reaching the pressure unit 7, the surface of the first substrate 4, which is intended to come in contact with the second substrate 2 is heated by means of a laser beam 11 with a wavelength range between 9 to 10 microns, which is emitted from a laser unit 10. The laser unit 10 shown comprises by way of example a CO₂ laser with a power in the range between 500 and 1500 W. In addition, the CO₂ laser is operated continuously or nearly continuously. To guide the laser beam 11 on the surface of the first substrate 4 a deflection unit 12 is provided which includes in particular a rotatably mounted polygon mirror 13. The polygon mirror 13 has a drive in the form of servomotors to drive the polygon mirror 13 at a desired rotational speed. In addition, the deflection unit may comprise a focusing device, which is not shown. The deflection unit 12 in particular in combination with the rotatably mounted polygon mirror 13 provides a way to deflect the laser beam 11 and to guide it over the surface of the first substrate 4 such that its projection is moved in a relative movement with respect to the surface in a projection movement direction over the surface of the first substrate 4 to allow heating of the first substrate 4 and convert it into a softened state. The deflection unit 12 is designed such that it guides at least temporarily the laser beam 11 over the surface of the first substrate 4 such that the projection movement direction moves at an angle to the feed direction to allow heating of the surface area during its movement in the feed direction. In order to obtain the desired temperature of the surface of the first substrate 4, also a temperature sensor 16 is provided, which determines the temperature of the upper surface immediately before the pressure unit 7. Furthermore, a beam trap 14 is provided in order to block in a controlled manner laser irradiation transmitted through the first substrate 4. For controlling the apparatus 1, both feeding means, the laser unit 10, the deflection unit 12 and the temperature sensor 16 are connected to a control unit 15. This control unit can match the feed rates of the substrates 2, 4 and the speed of the laser beam 11 across the surface of the first substrate 4 to each other, so that the surface of the first substrate 4 is heated to the desired temperature. Subsequently, the softened surface of the first substrate 4 is contacted with the second substrate 2 in the pressure unit 7. For pressing, both substrates 2, 4 are fed to the pressure unit 7 wherein a press roller 8 and a corresponding bedroll 9 press both substrates 2, 4 together.

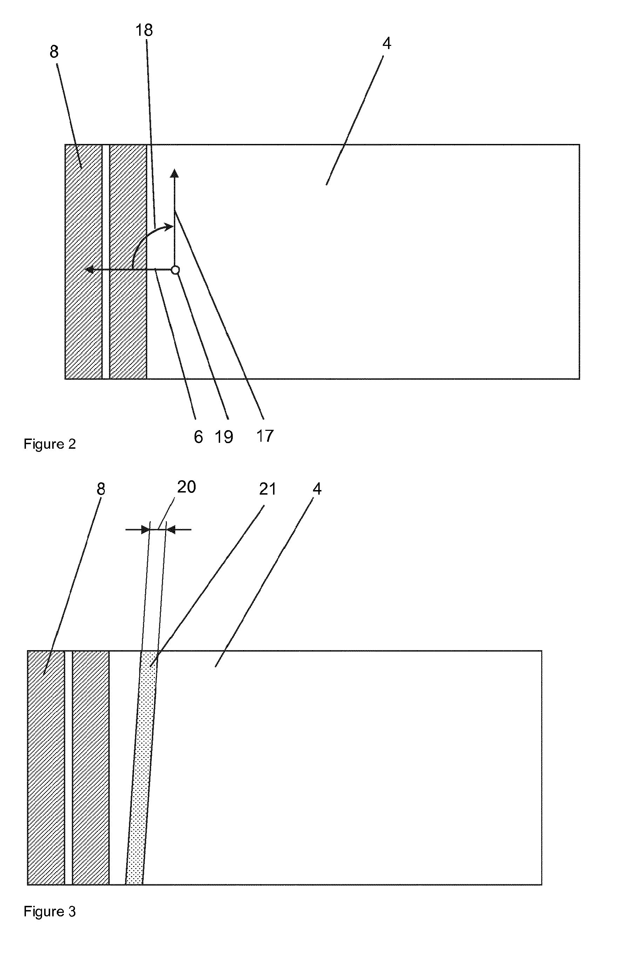

Figure 2 shows a sectional view through the section line A - A of the apparatus of Figure 1, with the cut extending through the press roller 8 and the sectional area is parallel to the surface of the first substrate 4. The device 1 is here shown in a photographic snapshot to illustrate the irradiation of the first substrate 4 by the laser unit 10 and the deflection unit 12. The laser beam 11 impinges on the surface of the first substrate 4 in a projection 19, wherein the energy input results in a heating of the surface. For further heating the surface, the laser beam 11 is deflected by means of the deflection unit 12 such that its projection 19 is moved over the surface in a projection movement direction 17. This active projection movement relative to the surface is independent of a movement of the substrate in the feed direction 6. In the shown embodiment the projection movement direction 17 is substantially orthogonal to the feed direction 6.

Figure 3 shows the sectional view of Figure 2 after a time period t1, during which the laser beam 11 has been guided over the first substrate 4 such that the projection 19 shown in Figure 2 has been moved from the first side edge of the substrate 4 to the opposite second side edge relative to the surface following the above described active projection movement direction. Further, the first substrate 4 has been moved during the irradiation in the feed direction 6, so that a projection line in form of a parallelogram extends over the surface, even though the projection movement direction 17 is substantially orthogonal to the feed direction 6. The movement of the first substrate 4 in the feed direction 6 has thus resulted in a passive projection movement across the surface. By means of the above described focusing means the width of the projection line 21 has been set to a projection width 20 of about 8 mm.

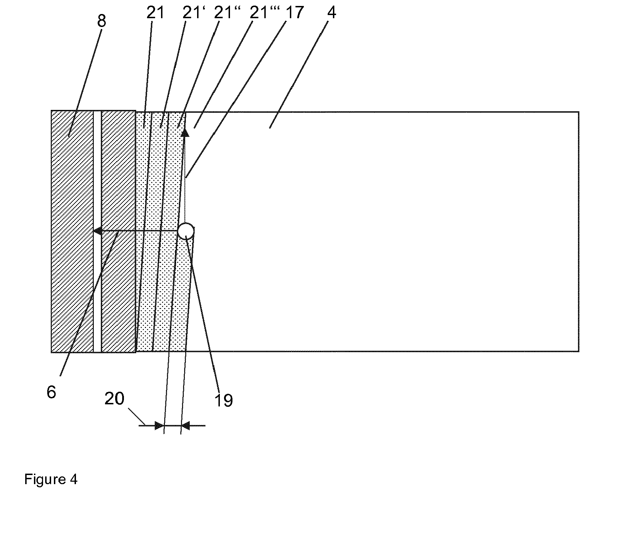

Figure 4 shows the sectional view of Figure 2 after the expiration of a time period t2, corresponding to a multiple of the time period t1 of Figure 3, in which, as described above, the laser beam 11 has been guided over the first substrate 4 such that the projection 19 shown in Figure 2 has been moved from the first side edge of the substrate 4 to the opposite second side edge relative to the surface by means of the above-described active projection movement. By use of the rotatably mounted polygon mirror 13, the laser beam 11 after reaching the second side edge of the substrate 4 is again deflected to the starting point on the first side edge of the substrate 4 and is again guided from there over the surface. The projection movement direction 17 here also extends substantially orthogonal to the feed direction 6. Here, the projection width 20, the time period between reaching two adjacent points on the first side of the substrate 4 and the movement speed of the first substrate 4 in the feed direction 6 are selected such that no point on the surface is doubly irradiated, wherein the projection lines 21, 21', 21", 21"' generated by the projection 17 moved across the surface in the time period t2 represent adjacent parallelograms on the surface of the substrate 4. Said parameters are further selected such that the first substrate after the irradiation by the laser beam 11 has, at all irradiated points on a line orthogonal to the feed direction, the same temperature.

Figure 5 shows a schematic view of a device of the invention 1 similar to Figure 1. The difference lies in the presence of a photomask 22 in form of a comb that blends out parts of the incident laser beam 11 that is depicted here in an angle different from that shown in Figure 1 to bring the point of impact of the laser beam on the substrate surface closer to the pressure unit 7. Although it may be present, the beam trap 14 is not shown in Figure 5.

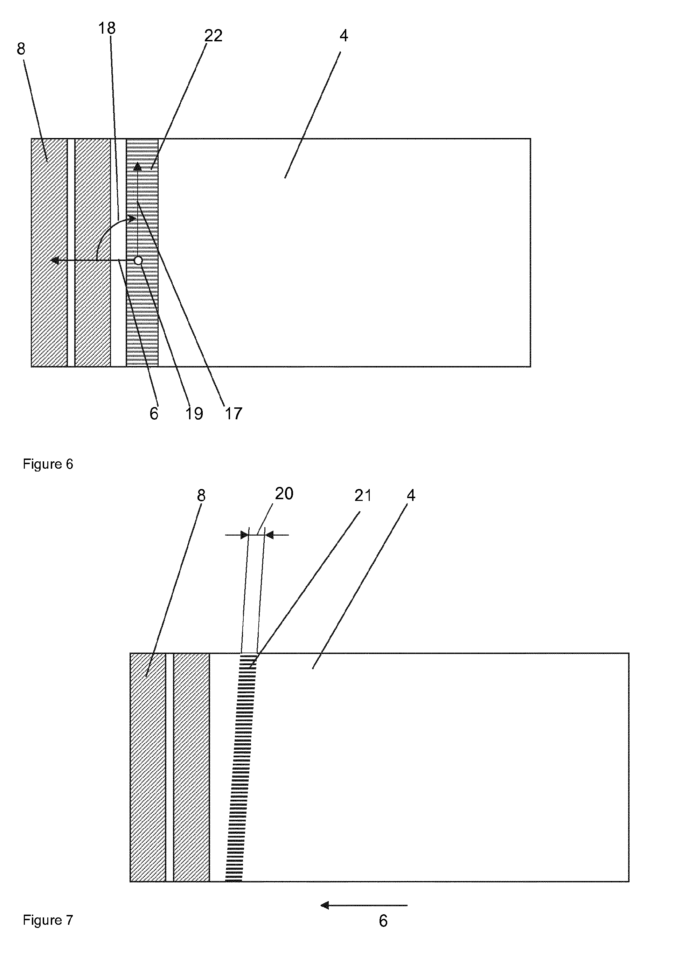

Figure 6 shows a sectional view through the section line A - A of the apparatus of Figure 5, with the cut extending through the press roller 8 and the sectional area is parallel to the surface of the first substrate 4. The device 1 is here shown in a photographic snapshot to illustrate the irradiation of the first substrate 4 by the laser unit 10 and the deflection unit 12 through the photomask 22. The laser beam 11 impinges on the surface of the first substrate 4 in a projection 19, wherein the energy application results in a heating of the surface. For further heating the surface, the laser beam 11 is deflected by means of the deflection unit 12 such that its projection 19 is moved over the surface in a projection movement direction 17. This active projection movement relative to the surface is independent of a movement of the substrate in the feed direction 6. In the shown embodiment the projection movement direction 17 is substantially orthogonal to the feed direction 6.

Figure 7 shows the sectional view of Figure 6 after the time period t1, during which the laser beam 11 has been guided over the first substrate 4 such that the projection 19 shown in Figure 6 has been moved from the first side edge of the substrate 4 to the opposite second side edge relative to the surface following the above described active projection movement direction. Further, the first substrate 4 has been moved during the irradiation in the feed direction 6, so that an imaginary projection line in form of a parallelogram consisting of alternating parallel areas of irradiated and thus heated and non-irradiated regions in form of short parallel lines has been formed.

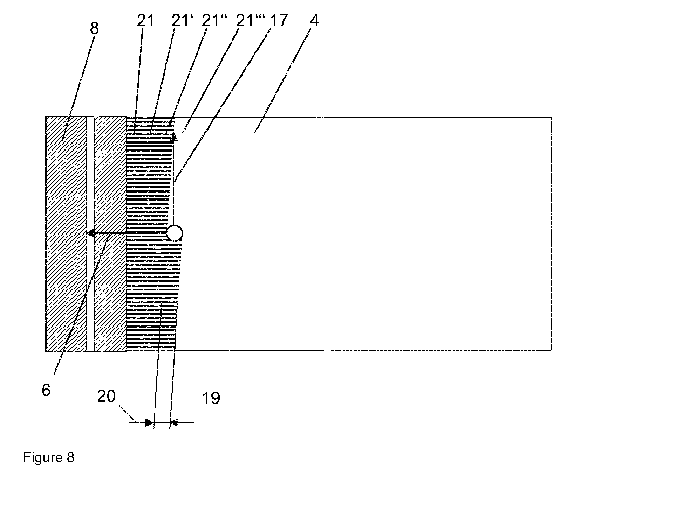

Figure 8 shows the sectional view of Figure 6 after the expiration of a time period t2, corresponding to a multiple of the time period t1 of Figure 7, in which, as described above, the laser beam 11 has been guided over the first substrate 4 such that the projection 19 shown in Figure 6 has been moved from the first side of the substrate 4 to the opposite second side relative to the surface by means of the above-described active projection movement. By use of the rotatably mounted polygon mirror 13, the laser beam 11 after reaching the second side edge of the substrate 4 is again deflected to the starting point on the first side edge of the substrate 4 and is again guided from there over the surface. The projection movement direction 17 here also extends substantially orthogonal to the feed direction 6. Here, the projection width 20, the time period between reaching two adjacent points on the first side of the substrate 4 and the movement speed of the first substrate 4 in the feed direction 6 are selected such that no point on the surface is doubly irradiated, wherein the projection lines 21, 21', 21", 21"' generated by the projection 17 moved across the surface in the time period t2 represent adjacent parallelograms on the surface of the substrate 4. Again each parallelogram consists of alternating areas of irradiated and non-irradiated (blocked by photomask 22) surface regions that take the form of parallel linear areas. Said parameters are further selected such that the first substrate after the irradiation by the laser beam 11 has, at all irradiated points on a line orthogonal to the feed direction, the same temperature.

### List of reference signs

- 1: device
- 2: second substrate
- 3: supply roll
- 4: first substrate
- 5: supply roll
- 6: feed direction
- 7: pressure unit
- 8: press roller
- 9: bedroll
- 10: laser unit
- 11: laser beam
- 12: deflection unit
- 13: polygon mirror
- 14: beam trap
- 15: control unit
- 16: temperature sensor
- 17: projection movement direction
- 18: angle
- 19: projection
- 20: projection width
- 21: projection line
- 22: photomask (comb)

All embodiments disclosed herein in relation to the processes of the invention are similarly applicable to the devices described herein and vice versa.

## Claims

1. Process, preferably continuous process, for bonding at least one first substrate, which comprises a thermoplastic polymer material surface, to at least one second substrate without an adhesive to form a laminate, comprising
(a) irradiating the thermoplastic polymer material surface of the first substrate with electromagnetic radiation in form of a laser beam such that the thermoplastic polymer material surface of the first substrate is at least locally heated to a softened state; and
(b) laminating the laser irradiated softened thermoplastic polymer material surface of the first substrate to the second substrate.

2. The process according to claim 1, wherein the process does not involve cooling the first substrate during or after irradiation with the laser beam.

3. The process according to claim 1 or 2, wherein the first substrate is a thermoplastic polymer film.

4. The process according to any one of claims 1 to 3, wherein the second substrate is a non-woven or woven fabric.

5. The process according to any one of claims 1 to 4, wherein the laser beam is directed to the thermoplastic polymer material surface of the first substrate by a polygonal mirror, which is pivotable around a rotation axis.

6. The process according to claim 5, wherein the laser beam is focused, optionally prior or after having been directed by the polygonal mirror.

7. The process according to any one of the preceding claims, wherein the process is a continuous process and the first and second substrates are transported in a feed direction and wherein laser beam is guided over the thermoplastic polymer material surface of the first substrate in a line pattern and/or essentially orthogonal to the movement direction of the first substrate.

8. The process according to any one of the preceding claims, wherein the laser beam is guided through a photomask for patterning the thermoplastic polymer material surface of the first substrate.

9. The process according to any one of the preceding claims, wherein the laser beam projection impinges on the thermoplastic polymer material surface of the first substrate less than 10 cm, preferably less than 1 cm, before the site where the two substrates are brought into contact with each other, preferably the nip or a roll laminator.

10. The process according to any one of the preceding claims, wherein the laser beam is guided over the thermoplastic polymer material surface of the first substrate and adapted to the movement speed of the first substrate such that time period between irradiation and lamination is essentially identical for each point on the thermoplastic polymer material surface.

11. The process according to any one of the preceding claims, wherein the laser
(a) operates at a wavelength in the range of 1 to 12 µm, preferably 5 to 10 µm, more preferably 9 to 10 µm;
(b) is a carbon dioxide laser; and/or
(c) is deflected onto the thermoplastic polymer material surface of the first substrate at an angle of up to about 90°, preferably about 90°, relative to the feed direction of the first substrate.

12. The process according to any one of the preceding claims, wherein the thermoplastic polymer material is a polyolefin, preferably a polyethylene.

13. The process according to any one of the preceding claims, wherein step (b) is carried out by use of a roll laminator or nip station.

14. Device for laminating at least one first substrate, wherein the at least one first substrate comprises a thermoplastic polymer material surface, and wherein the at least one first substrate preferably is a thermoplastic polymer film, to at least one second substrate, wherein the at least one second substrate preferably is a non-woven or woven fabric, preferably in a continuous process, comprising
(a) at least one transporting means to transport the at least one first substrate, the at least one second substrate or both in a feed direction;
(b) a laser for generating a laser beam and irradiating the thermoplastic polymer material surface such that it is at least locally heated to a softened state, wherein the laser beam is guided such that its projection on the thermoplastic polymer material surface is moved relatively to the surface in a projection movement direction, wherein the projection movement direction is at least temporally angled relative to the feed direction, to allow heating the thermoplastic polymer material surface before the laminating step during movement of the first substrate in the feed direction, wherein the laser preferably emits infrared radiation of a wavelength in the range of 1 to 12 µm, more preferably 5 to 10 µm, even more preferably 9 to 10 µm, wherein the laser optionally is a CO₂ laser;
(c) a laminating unit to laminate the at least one first substrate with its softened thermoplastic polymer material surface side to the at least one second substrate.

15. The device according to claim 14, wherein the device further comprises
(a) a laser beam deflection unit to deflect the laser beam to and guide it over the thermoplastic polymer material surface, wherein the laser beam deflection unit preferably comprises a polygonal mirror;
(b) a laser beam focusing means to focus the laser beam; and/or
(c) a photomask for patterning the surface of the thermoplastic polymer material surface.
